# EUROPÄISCHE PATENTSCHRIFT

(11) **EP 0 981 286 B1**
(45) Veröffentlichungstag und Bekanntmachung des Hinweises auf die Patenterteilung: **29.08.2001**
(21) Anmeldenummer: 97920449.2
(22) Anmeldetag: 13.05.1997
(51) Int. Cl.: A41D 31/00, D03D 15/00, D02G 3/02

(54) **FLEXIBLES, FLÄCHIGES ABDECKMATERIAL, INSBESONDERE ZUR ABSCHIRMUNG MENSCHLICHER HAUT BZW. HAUTBEREICHE GEGEN UNERWÜNSCHTE STRAHLUNG**
FLEXIBLE, TWO-DIMENSIONAL SCREENING MATERIAL, ESPECIALLY FOR PROTECTING HUMAN SKIN OR AREAS OF SKIN AGAINST UNDESIRABLE RADIATION
MATERIAU DE RECOUVREMENT SOUPLE EN NAPPE, EN PARTICULIER POUR LA PROTECTION DE LA PEAU OU DE ZONES CUTANEES HUMAINES CONTRE DES RAYONNEMENTS INDESIRABLES

(43) Veröffentlichungstag der Anmeldung: 01.03.2000
(73) Patentinhaber: Alth, Gerhart, 1220 Wien (AT); NAGYPAL, Tibor, 1210 Wien (AT)
(72) Erfinder: Alth, Gerhart, 1220 Wien (AT); NAGYPAL, Tibor, 1210 Wien (AT)
(74) Vertreter: Itze, Peter, Dipl.-Ing.
(86) Internationale Anmeldenummer: AT9700094
(87) Internationale Veröffentlichungsnummer: WO9851172

(56) Entgegenhaltungen:
- WO-A-94/04744
- DE-A- 2 720 731
- US-A- 4 546 493
- US-A- 4 798 427
- PATENT ABSTRACTS OF JAPAN vol. 016, no. 262 (M-1265), 15.Juni 1992 & JP 04 064438 A (ARAI KINSHI KOUGIYOU KK), 28.Februar 1992,

## Beschreibung

Die Erfindung bezieht sich auf ein flexibles, flächiges Abdeckmaterial, insbesondere zur Abschirmung menschlicher Haut bzw. Hautbereiche gegen unerwünschte Strahlen, wobei das Abdeckmaterial als optischer Filter ausgebildet ist.

Bei der Herstellung von Geweben werden bisher verschiedenste Basismaterialien mit Hilfe traditioneller Techniken zu Bekleidungsstoffen verarbeitet, bei welchen zunächst die zu webenden Fäden versponnen werden. Die so erzeugten Textilien wirken abhängig von der Faserstruktur, vom Faserstoff und der Webstruktur abschirmend auf die Haut. Die Wirkung der Textilien ist dabei in verschiedensten Richtungen, u.zw. Thermodynamik, gasdurchlässig, Oberflächeneffekte u.dgl. in letzter Zeit gründlich untersucht und geprüft worden, wobei alle den Untersuchungen zugrundeliegenden Textilien aus gesponnenen Fadenstrukturen bestehen, welche dann zu den Geweben vereinigt wurden. Was allerdings nicht erkannt wurde, ist, daß noch zusätzliche Effekte in der Wechselwirkung zwischen Haut und Textilien komplex auftreten, die zwar einzeln keinen direkten Einfluß auf die Haut ausüben, aber in Superposition miteinander sehr effektiv werden können.

Bei der heutigen Technologie der Gewebeerstellung, werden die Fasern mittels einer Kombination aus Spinn- und Webtechnologie zu Textilien verarbeitet. Die Faserstruktur des Fadens weist geometrische Unregelmäßigkeiten auf, die die Entstehung optischer Filtereffekte verhindert. In der räumlichen Faserstruktur dominiert die stoffbedingte Streuung und Absorption, wobei sich die Spektralcharakteristik der heutigen Textilien aus der stofflichen Beschaffenheit ergibt.

Die Lichtdurchlässigkeit der heute üblichen Gewebe hängt davon ab, ob es ein Einschichtgewebe oder aber ein Mehrschichtgewebe, z.B. ein Kleidungsstück, ist.

Beim Einschichtgewebe weisen die Meßdaten sehr oft große Streuungen auf, u.zw. abhängig von Faserstoff, Fadendurchmesser, Spinntechnik, Webtechnik oder Farbstoff. Bei Anwendung von weißem Licht (Wolfram-Breitbandlicht) weist die spektrale Dämpfungscharakteristik wegen der Überlagerung vieler Komponenten eine breitbandige Penetration auf. Die Dämpfungsbereiche sind dabei wie folgt:
UV A und B (200 - 400 nm): 1 - 30 %
Sichtbares Licht (400 - 780 nm): 5 - 55 %
Nah IR (780 - 1000 nm): 8 - 75 %
IR (1000 - 12000 nm): 20 - 95 %.

Bei Mehrschichttextilien, z.B. Kleidung, sind die Dämpfungsbereiche aufgrund der Überlagerung der Schichten wie folgt:
UV (A+B 200 - 400 nm) 0,01 - 10 %
Sichtbares Licht 400 - 780 nm: 0,1 - 20 %
Nah IR 780 - 1000 nm: 10 - 50 %
IR über 1000 nm 30 - 99 %.

Die auf den menschlichen Körper einwirkende Strahlung wäre an sich eine kompensierbare Belastung für das gesunde Hautgewebe, kann aber bei Überlagerung mit zusätzlichen chemischen, mechanischen und elektrostatischen Effekten aufgrund einer Synergiewirkung zu gefährlichen Hautveränderungen führen.

Dabei kann die Spektralverteilung und das energetische Muster der Strahlung eine wesentliche Rolle bei der Entstehung bestimmter Krankheitsherde spielen. Insbesondere wäre es wichtig, diesen Wirkungskomplex bei procancerogenem und cancerogenem Zustand zu minimieren.

Bei einer bekannten Ausbildung der eingangs genannten Art (DE 2720731 A1) handelt es sich um ein Gewebe aus gesponnenen Fäden von Polymeren, welches Gewebe zur Vermeidung von Transparenz mit Farbfilterpigmenten bedeckt bzw. oberflächenbedruckt ist. Gemäß dieser Druckschrift soll die bedeckende Wirkung des Stoffes bei einem Minimum an Material, das ein Minimum an Grenzflächen aufweist, maximal sein. Die Fäden, aus denen der Stoff besteht, sollen eine maximal reflektierte Oberfläche besitzen, wobei die kristallographische Struktur der Fäden sich durch die Anwesenheit sehr vieler kleiner Kristallite und das Fehlen von großen Kristallien auszeichnen soll. Der Stoff gemäß der bekannten Ausbildung wird daher aus Fäden und mit Arbeitsvorgängen fertiggestellt, die zum Ziel haben, den Durchlaß eines bestimmten Bereiches der ultravioletten Strahlung zuzulassen und ihre Brechung, Reflexion und Beugung in Richtung auf die Haut hervorzurufen, u.zw. aufgrund der inneren kristallographischen Struktur der Fäden, ihrer Oberflächenstruktur und der Konfiguration des Stoffes selbst. Gemäß dieser bekannten Druckschrift soll also das Zuführen bestimmter Wellenlängen auf die Haut erhöht werden, u.zw. nur solcher, welche das Einlagern der Pigmente in die Haut begünstigen. Alle anderen sollen weitgehend ausgeschaltet sein.

Der Erfindung liegt die Aufgabe zugrunde, ein Abdeckmaterial der eingangs genannten Art zu schaffen, mit welchem Strahlungen gezielt vom menschlichen Körper ferngehalten werden können, wobei zudem die Filterung selektiv gestaltbar sein soll.

Erfindungsgemäß wird dies dadurch erreicht, daß das Material zueinander parallel verlaufende Beugungs- und/oder Reflexionskanten aufweist, deren gegenseitiger Abstand ein Vielfaches der Wellenlänge der abzuschirmenden Strahlen beträgt. Auf diese Art ist es möglich, ein optisches Filter zu bilden, das jede beliebige medizinische und spezifische Spektralcharakteristik ergeben kann, je nachdem, was gewünscht und notwendig ist. Es ist also hier möglich, nicht nur im UV-Bereich zu arbeiten, sondern es kann auch im Infrarotbereich und im Bereich des sichtbaren Lichtes gearbeitet werden, was bei medizinischen Heil- und Schutzeffekten Bedingung ist. Es ist also möglich, aufgrund der Änderung des Abstandes der Beugungs- und/oder Reflexionskanten die Durchlässigkeit bzw. die Filterung selektiv zu gestalten, wobei beim Anmeldungsgegenstand auch Struktursandwiche, Mehrschichtanordnungen u.dgl. ermöglicht sind. Der Schwächungsfaktor setzt sich dabei aus zwei Faktoren zusammen: 1. Schwächung der Strahlung aufgrund der üblichen Textilfaser durch den Faserstoff selbst beträgt 1 - 50 %. Eine weitere Dämpfung von etwa 50 % entsteht aufgrund des Fresnell-Effektes (in Wellenlängenabstand x n Entfernung von der Faserebene gemessen). Die geometrische Filtercharakteristik weist 6 dB/Oktav Dämpfung auf, die stoffliche Filtercharakteristik bewegt sich im Bereich von 0,5 - 6 dB/Oktav bei den üblichen Faserstoffen. Der Spaltenabstand bestimmt die Filtercharakteristik in der Spektralbandmitte.

Vorteilhafterweise kann der gegenseitige Abstand der Beugungs- und oder Reflexionskanten ein ganzzahliges Vielfaches der halben Wellenlänge der abzuschirmenden Strahlung betragen. Zwei parallel angeordnete Kanten mit einem Abstand A wirken als optische Spalte, wobei für Wellenlängen der Strahlung, die zweimal A betragen, der Fresnell-Effekt auftritt und als Interferenzfilter wirkt. Dabei können die Beugungs- und oder Reflexionskanten durch zueinander parallel angeordnete direkte Fasern gebildet sein, wobei die Fasern durch Verkleben oder Verschweißen mit Querbindern zu einem optischen Gitter verbunden sind. Dieses optische Gitter bildet dann aufgrund des Fresnell-Effektes den optischen Filter, wobei aufgrund des Faserdurchmesser und/oder -abstandes die Filtercharakteristik eingestellt werden kann.

Zur Erzielung großflächiger, stabiler Gewebe können die mit den Querbindern verbundenen Fasern zu langen schmalen Bändern vereinigt sein, welche ihrerseits zu großflächigen Matten, Geweben od.dgl. geflochten sind. Diese Matten oder Gewebe können dann direkt für die Abdeckung gewisser Hautbereiche herangezogen werden.

Bei einer anderen Ausführungsform können die Beugungs- und oder Reflexionskanten durch Rillenkanten oder Schlitzkanten gebildet sein, die in Folien od.dgl. eingebracht sind. Dadurch erübrigt sich das Ausrichten und Verbinden der Fasern sowie auch dann in weiterer Folge das Anfertigen von Matten oder Geweben. Es können aber auch die Folien zur Bildung der Beugungs- und/oder Reflexionskanten gitterförmig perforiert sein.

Zur Erhöhung der Abschirmwirkung können mehrere Lagen des Abdeckmaterials schichtweise übereinandergelegt sein, wobei gegebenenfalls die ) Beugungs- und/oder Reflexionskanten der einzelnen Kanten zueinander im rechten Winkel stehen. Zwei planparallele gitterstrukturierte Faseranordnungen wirken nämlich als kombinierte Fresnell- und Polarisationsfilter. Die von dieser Anordnung stammende Dämpfung beträgt zwischen 50 und 75%, wobei zu bedenken ist, daß die stofflichen und geometrischen Filterwirkungen nicht unabhängig voneinander meßbar sind und daher auch nicht getrennt werden können. Bei den üblichen Faserstoffarten ergänzen und verstärken die Filterwirkungen einander.

Mit entsprechender Kombination von mehreren Stoffen bzw. mit Schichten unterschiedlicher Geometrie der Faseranordnungen, können Abschirmungen erzielt werden, die vom UV-Licht bis in den Infrarotbereich wirksam sind und bezüglich des zu behandelnden Hautgewebes optimiert filternd hergestellt werden können. Zu diesem Zwecke können die Abstände der Beugungs- und oder Reflexionskanten der einzelnen Schichten unterschiedlich sein, was zu den angeführten unterschiedlichen Dämpfungswirkungen der einzelnen Schichten führt.

Schließlich können die einzelnen Schichten voneinander durch Abstandhalter distanziert sein, wodurch sichergestellt ist, daß die einzelnen Schichten einander gegenseitig nicht ungünstig beeinflussen.

In der Zeichnung sind Ausführungsbeispiele des Erfindungsgegenstandes dargestellt.

Fig. 1 zeigt ein Filterbandgewebe in Draufsicht, wobei die Mehrschichtigkeit durch Einzeichnen einer weiteren nach hinten versetzten Schicht angedeutet ist.

Fig. 2 zeigt einen Ausschnitt aus einem Filterband,

Fig. 3 gibt im Schnitt ein zweischichtiges Abdeckmaterial wieder.

Fig. 4 veranschaulicht gleichfalls im Schnitt und in kleinerem Maßstab eine mehrschichtige Filtertextilier.

Fig. 5 gibt ein gegenüber Fig. 2 abgewandeltes Filterband wieder, bei welchem die Fasern mit den Querbindern geflochten sind.

Fig. 6 ist eine schaubildliche Darstellung eines Filterbandes bei auf den Querbindern aufgeklebten Fasern.

Fig. 7 schließlich zeigt eine perforierte Folie.

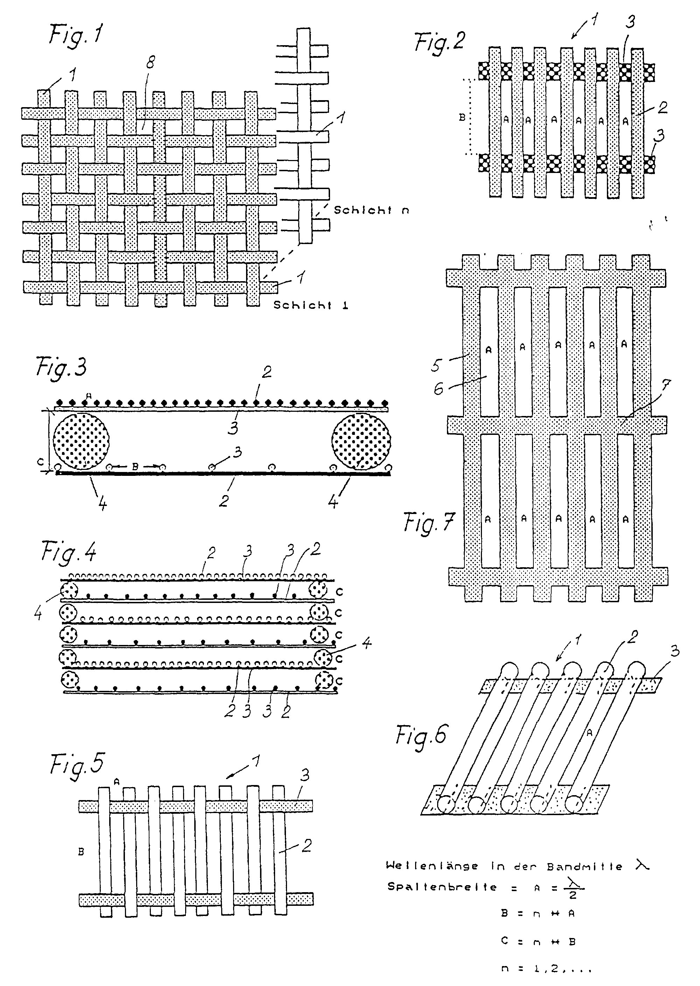

Mit 1 sind Filterbänder bezeichnet, welche aus parallel zueinander verlegten, gereckten, geradlinig verlaufenden Fasern 2 gebildet sind, welche Fasern mittels Querbindern 3 untereinander verbunden sind. Gemäß Fig. 2 sind die Fasern 2, 3 untereinander gleich, wobei die Fasern 2 und die Querbinder 3 miteinander durch Kleben oder Verschweißen verbunden sind.

Gemäß Fig. 5 sind die Querbinder mit den Fasern 2 verflochten. Fig. 6 zeigt eine der Fig. 2 ähnliche Ausrichtung, wobei die Querbinder 3 durch Folienstreifen gebildet sind.

Bei der perforierten Folie gemäß Fig. 7 sind Folienbereiche 5 und Längsschlitze 6 einander abwechselnd angeordnet, wobei die Folienbereiche 5 durch quer zu diesen verlaufende weitere Verbindungsbereiche 7 miteinander verbunden sind.

Bei allen Ausführungsvarianten ist der Abstand zwischen den Fasern 2 bzw. von den Folienbereichen 5 A, wobei dieser Abstand A, der die Spaltbreite definiert, gleich λ/2, also der halben Wellenlänge der abzuschirmenden Strahlung ist. Die Entfernung der Querbinder 3 voneinander, in den Figuren mit B bezeichnet, beträgt ein ganzzahliges Vielfaches des Abstandes A. Der Abstand C, also die Entfernung mehrerer Schichten voneinander, ist ein ganzzahliges Vielfaches des Abstandes B der Querbinder. Bevorzugt beträgt der Abstand zwischen den Kanten der Spalten etwa das 1 bis 100-fache der halben Wellenlänge, wobei sich die Wirkung des Gewebes mit der Zunahme der Spaltbreite verringert. Diese Verringerung kann durch Vergrößerung der Anzahl der Schichten ausgeglichen werden. Die Verteilung der Spaltbreiten im konkret realisierten System bestimmt die spektrale Bandbreite des Gesamtsystems.

Wie aus Fig. 3 ersichtlich, sind die Fasern der Zweischichtfiltertextilie zueinander im rechten Winkel angeordnet, wodurch zusätzlich auch ein Polarisationsfiltereffekt auftritt, sodaß die durch die obere Filterschicht ausgerichtete Strahlung quer zur Ausrichtung der Spalten der darunterliegenden Filterschicht ist, sodaß bei polarisiertem Licht dann Extinktion auftritt.

Die in Fig. 1 mit 1 bezeichneten Filterbänder können dabei nicht nur als Einschichttextilien ausgebildet sein, sondern können auch durch die in Fig. 3 wiedergegebene Zweischichtfiltertextilie oder aber auch durch eine Mehrschichtfiltertextilie gemäß Fig. 4 gebildet sein, wodurch sich die Dicke der einzelnen Filterbandgewebe ändert. Bei Ausbildung der Filterbänder als Einschichttextilien, können mehrere derartige Filterbandgewebe übereinanderliegend angeordnet sein, wobei innerhalb der Filterbandgewebe zwischen den einzelnen Filterbandkanten Poren 8 freigelassen sind, um eine entsprechende Belüftung der darunterliegenden Haut zu erreichen.

Für gewisse Verwendungszwecke kann es angezeigt sein, anstelle von Geweben Folien zu verwenden, die dann eine entsprechende optische Filterwirkung durch Ausbildung der Breite der Spalten 6 ergibt. Auch derartige Folien können in Verbänden zu mehrschichtigen Folien zusammengelegt sein, wobei auch bei diesen Ausbildungen die Richtung der Spalten 6 bei übereinanderliegenden Filtern im rechten Winkel zueinander verlaufen.

Die Herstellung der Filterschichten kann dabei auf jede mögliche Weise vorgenommen werden, u.zw. mit Durchweben, Fasernverkleben, Folienperforieren und/oder eine Kombination dieser Technologien. Alle Herstellungsverfahren, die die notwendige mechanische Stabilität der geometrischen Faseranordnung sichern können, sind für die Produktion der erfindungsgemäßen Abdeckung passend.

Die Herstellung der Fasern erfolgt dabei auf Basis eines Spritzverfahrens, wobei die aus den Düsen austretenden Fasern elektrostatisch dann gezogen werden, wobei sie einen Faserdurchmesser von etwa 0,9 *µ* haben. Zur Herstellung der Faserbänder können solche Fasern gewählt werden, deren Durchmesser dem Abstand A entspricht, wobei die Fasern aneinander anliegend verlegt und danach jede zweite Faser entfernt wird. Damit entsteht ein Gitter, bei welchem die einzelnen Fasern untereinander den Abstand A aufweisen. Anstelle von einer Faserspinntechnologie kann auch ein flaches Faserband hergestellt werden, welches aus länglich parallellaufenden Fasern, deren Abstand A beträgt, mit Querfasern im Schmelz-, Klebeverfahren hergestellt wird. Dieses Filterband wird dann mit Hilfe der Gitterwebtechnologie zu Gewebe gewoben. Bei der Realisation muß man die Verdrehung des Faserbandes verhindern. Die Breite des Faserbandes wird an den Verwendungszweck angepaßt.

Wie schon angeführt, können anstelle von Faserbändern auch Folienbänder verwendet werden, die eine Stärke von etwa 200 bis 2000 nm aufweisen, wobei diese Folienbänder zur Erzielung der gewünschten Filtercharakteristik rasterperforiert bzw. oberflächengerillt sind. Auch diese Filterbänder werden mit Hilfe von Gitterwebtechnologien zu Textilien gewoben. Auch in diesem Fall wird die Breite des Bandes dem Verwendungszweck gemäß ausgewählt werden.

Bei Filterfolien kann anstelle von Fasern auch eine großflächigere Folie verwendet werden, die entsprechend perforiert und/oder gerillt ist, wobei auch bei diesen Ausbildungen der Spaltenabstand bzw. die optische Mikrogitterstruktur einen Abstand von A aufweist. Die Perforation dient auch in diesem Fall zur Sicherung der Gasdurchlässigkeit.

Bei der bereits erwähnten Sandwichstruktur, also bei Strukturen, bei welchen mehrschichtige Textilien hergestellt werden, werden diese Schichten entweder zusammengenäht, zusammengeklebt oder verschweißt. Die resultierende Sandwichstruktur weist damit eine entsprechende optische Filtercharakteristik auf, wobei mehrere derartige sandwichartige Strukturen mit Hilfe von abstandhaltenden Fasern miteinander integriert werden. Diese Mehrschichttextilien ermöglichen die Erzielung von Abdeckmaterialien mit beliebiger Spektralcharakteristik.

Die Vorteile des Anmeldungsgegenstandes können kurz wie folgt zusammengefaßt werden:
1. Herstellung von Textilien mit beliebiger Spektralcharakteristik,
2. Herstellung von Textilien, die dem Hautzustand angepaßte optische Eigenschaften besitzen, und
3. Beibehaltung der Vorteile bisheriger Textilien.

Das erfindungsgemäße Abdeckmaterial kann dabei wie folgt verwendet werden:
1. Textilien für Ausfilterung der UV A-Band, AB Band (Sperrfilter: 200 - 300 nm, 200 - 400 nm).
2. Textilien mit Faseranordnung, welche für gesunde Haut optimiert ist (Sperrfilter für 250 - 350 und lowpass: up 700 nm)
3. Textilien für pilzkranke Haut und Psoriasis, mit angepaßter optischer Filtercharakteristik (Sperrfilter ab 600 - 900 nm)
4. Textilien für krebsgefährdete (praekanzeröse) Haut, mit optimierter optischer Filtercharakteristik.
5. Textilien optimiert für verbrannte bzw. für entzündete Haut. (Durchlaßfilter: 450 - 600 nm)
6. Textilien für durchblutungsgestörte Haut. (Durchlaßfilter: 500 - 900 nm)
7. Textilien für Lichttherapie (Spektralmusterfilter).
8. Textilien für Wärmeisolierung (IR Durchlaßfilter). Die Textilienschichten werden paarweise aus Filtern und IR-reflektierenden Schichten konstruiert.
9. Textilien für spektrale Identifikation (Verschlüsselte spektrale Charakteristik für sicherheitstechnische Anwendungen).
10. Textilien mit Weit-IR Filterfähigkeiten für elektromagnetische Schutzwirkung (Weit-IR, usw.)
11. Textilien Patientenüberwachung - exakt definierte Frequenzbereiche (intensive care).
12. Textilien für Überwachung von Körperfunktionen (z.B. Temperatur, Stoffwechselvorgänge).

## Patentansprüche

1. Flexibles flächiges Abdeckmaterial, insbesondere zur Abschirmung menschlicher Haut bzw. Hautbereiche gegen unerwünschte Strahlen, wobei das Abdeckmaterial als optischer Filter ausgebildet ist, **dadurch gekennzeichnet**, daß das Material zueinander parallel verlaufende Beugungs- und/oder Reflexionskanten aufweist, deren gegenseitiger Abstand (A) ein Vielfaches der Wellenlänge der abzuschirmenden Strahlen beträgt.

2. Abdeckmaterial nach Anspruch 1, **dadurch gekennzeichnet**, daß der gegenseitige Abstand (A) der Beugungs- und/oder Reflexionskanten ein ganzzahliges Vielfaches der halben Wellenlänge der abzuschirmenden Strahlung beträgt.

3. Abdeckmaterial nach Anspruch 1 oder 2, **dadurch gekennzeichnet**, daß die Beugungs- und/oder Reflexionskanten durch zueinander parallel angeordnete gereckte Fasern (2) gebildet sind, wobei die Fasern durch Verkleben oder Verschweißen mit Querbindern (3) zu einem optischen Gitter verbunden sind.

4. Abdeckmaterial nach Anspruch 3, **dadurch gekennzeichnet**, daß die mit den Querbindern(3) verbundenen Fasern (2) zu langen schmalen Bändern (1) vereinigt sind, welche ihrerseits zu großflächigen Matten, Geweben od.dgl. geflochten sind.

5. Abdeckmaterial nach Anspruch 1 oder 2, **dadurch gekennzeichnet**, daß die Beugungs- und/oder Reflexionskanten durch Rillenkanten oder Schlitzkanten gebildet sind, die in Folien (5, 7) od. dgl. eingebracht sind.

6. Abdeckmaterial nach Anspruch 5, **dadurch gekennzeichnet**, daß bei Vorhandensein von Rillen in den Folien, der Rillengrund stellenweise durchbrochen ist.

7. Abdeckmaterial nach Anspruch 5 oder 6, **dadurch gekennzeichnet**, daß die Folien (5, 9) zur Bildung der Beugungs- und/oder Reflexionskanten gitterförmig perforiert sind.

8. Abdeckmaterial nach einem der Ansprüche 1 bis 7, **dadurch gekennzeichnet**, daß mehrere Lagen des Abdeckmaterials schichtweise übereinandergelegt sind, wobei gegebenenfalls die Beugungs- und/oder Reflexionskanten der einzelnen Schichten zueinander im rechten Winkel stehen.

9. Abdeckmaterial nach Anspruch 8, **dadurch gekennzeichnet**, daß die Abstände der Beugungs- und/oder Reflexionskanten der einzelnen Schichten unterschiedlich sind.

10. Abdeckmaterial nach Anspruch 8 oder 9, **dadurch gekennzeichnet**, daß die einzelnen Schichten voneinander durch Abstandhalter distanziert sind.

## Claims

1. A flexible planar masking material, in particular for screening human skin or areas of the skin from undesirable radiation, wherein the masking material is in the form of an optical filter, **characterised in that** the material has diffraction and/or reflection edges extending parallel to one another, the mutual distance (A) apart of which amounts to a multiple of the wavelength of the radiation to be screened.

2. A masking material according to Claim 1, **characterised in that** mutual distance (A) apart of the diffraction and/or reflection edges amounts to a whole number multiple of half the wavelength of the radiation to be screened.

3. A masking material according to Claim 1 or 2, **characterised in that** the diffraction and/or reflection edges are formed by oriented fibres (2) disposed parallel to one another, wherein the fibres are joined by bonding or welding to cross binders (3) to form an optical grating.

4. A masking material according to Claim 3, **characterised in that** the fibres (2) joined to the cross binders (3) are combined to form long narrow strips (1) which, in turn, are braided to form large-area mats, fabrics or the like.

5. A masking material according to Claim 1 or 2, **characterised in that** the diffraction and/or reflection edges are formed by groove edges or slot edges which are introduced into sheets (5,7) or the like.

6. A masking material according to Claim 5, **characterised in that** if grooves are present in the sheets, the bottom of the groove is pierced in places,

7. A masking material according to Claim 5 or 6, **characterised in that** the sheets (5,9) are perforated in the manner of a lattice to form the diffraction and/or reflection edges

8. A masking material according to any one of Claims 1 to 7, **characterised in that** a plurality of layers of the masking material are superimposed in laminated manner, wherein the diffraction and/or reflection edges of the individual layers are optionally at right angles to one another.

9. A masking material according to Claim 8, **characterised in that** spacings of the diffraction and/or reflection edges of the individual layers are different.

10. A masking material according to Claim 8 or 9, **characterised in that** the individual layers are separated from one another by spacers.

## Revendications

1. Matériau de recouvrement plan, flexible, destiné en particulier à protéger la peau humaine ou des zones de peau vis-à-vis de rayons indésirables, le matériau de recouvrement étant conformé en filtre optique, **caractérisé en ce que** le matériau présente des bords diffractants et/ou réfléchissants parallèles les uns aux autres, dont l'espacement réciproque (A) représente un multiple de la longueur d'onde des rayons dont il faut se protéger.

2. Matériau de recouvrement selon la revendication 1, **caractérisé en ce que** l'espacement réciproque (A) des bords diffractants et/ou réfléchissants représente un multiple entier de la moitié de la longueur d'onde du rayonnement dont il faut se protéger.

3. Matériau de recouvrement selon la revendication 1 ou 2, **caractérisé en ce que** les bords diffractants et/ou réfléchissants sont constitués par des fibres (2) étirées parallèles les unes aux autres, les fibres étant reliées, par collage ou soudage, à des liens transversaux (3), pour former une grille optique.

4. Matériau de recouvrement selon la revendication 3, **caractérisé en ce que** les fibres (2) qui sont reliées aux liens transversaux (3) sont réunies en longues bandes étroites (1) qui, à leur tour, sont tressées en nattes, tissu ou similaire, couvrant une grande surface.

5. Matériau de recouvrement selon la revendication 1 ou 2, **caractérisé en ce que** les bords diffractants et/ou réfléchissants sont constitués par des bords rainurés ou en bords à fentes, qui sont ménagés dans des feuilles (5, 7) ou similaires.

6. Matériau de recouvrement selon la revendication 5, **caractérisé en ce que**, lorsque des rainures sont présentes dans les feuilles, le fond de la rainure est partiellement percé.

7. Matériau de recouvrement selon la revendication 5 ou 6, **caractérisé en ce que** les feuilles (5, 9) sont perforées suivant une forme de grille, pour former les bords diffractants et/ou réfléchissants.

8. Matériau de recouvrement selon l'une des revendications 1 à 7, **caractérisé en ce que** plusieurs nappes de matériau de recouvrement sont superposées, en couches, les bords diffractants et/ou réfléchissants des différentes couches formant, le cas échéant, un angle droit entre eux.

9. Matériau de recouvrement selon la revendication 8, **caractérisé en ce qu**'il existe des espacements différents entre les bords diffractants et/ou réfléchissants des différentes couches.

10. Matériau de recouvrement selon la revendication 8 ou 9, **caractérisé en ce que** les différentes couches sont maintenues à distance les unes des autres par des écarteurs.
